# EUROPEAN PATENT SPECIFICATION

(11) **EP 3 683 971 B1**
(45) Date of publication and mention of the grant of the patent: **29.12.2021**
(21) Application number: 19152882.7
(22) Date of filing: 21.01.2019
(51) Int. Cl.: H04B 3/32, H04L 5/14, H04B 3/487

(54) **FULL DUPLEX DOCSIS SYSTEMS**
VOLLDUPLEX-DOCSIS-SYSTEME
SYSTÈMES DOCSIS EN DUPLEX INTÉGRAL

(43) Date of publication of application: 22.07.2020
(73) Proprietor: Nokia Solutions and Networks Oy, 02610 Espoo (FI)
(72) Inventor: COOMANS, Werner, 2018 Antwerp (BE); ABOU SALEH, Ahmad, 2018 Antwerp (BE)
(74) Representative: MERH-IP Matias Erny Reichl Hoffmann Patentanwälte PartG mbB

(56) References cited:
- EP-A1- 3 389 235
- EP-B1- 3 389 235

## Description

### Technical Field

The present document relates to the Full Duplex (FDX) Data Over Cable Service Interface Specification (DOCSIS). In particular, the present document relates to method, apparatuses and systems for deploying a FDX DOCSIS node on a FDX band over N+x cable plants using non-full duplex amplifiers.

### Background

In general, a FDX DOCSIS node refers to a node in a cable (e.g., coaxial cable) system which shares a common frequency bandwidth between the forward path and the return path. The forward path may also be referred to as the downstream (DS) path. The return path may also be referred to as upstream (US) path. In particular, the frequency spectrum for FDX DOCSIS is defined as follows:
- 5 - 85 MHz: upstream-only legacy band;
- 108 - 684 MHz: shared downstream and upstream band;
- 684 - 1218 MHz: downstream-only legacy band.

The frequency spectrum between 108-684 MHz can therefore be also referred to as the FDX band.

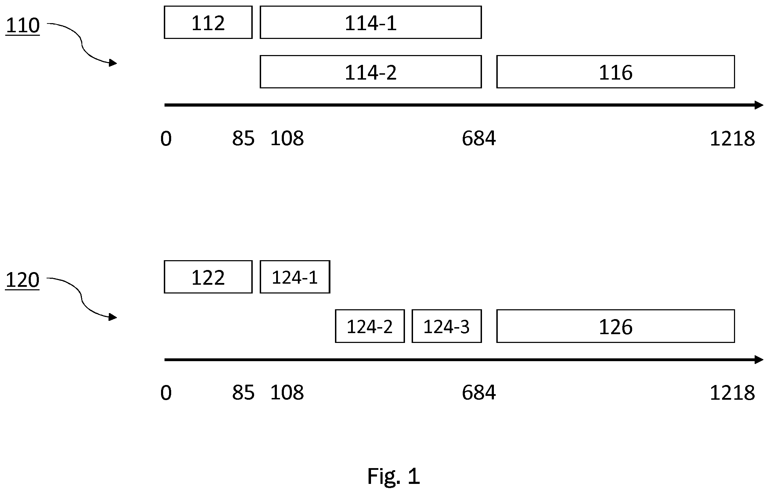

FDX DOCSIS introduces full duplex operation supporting simultaneous upstream and downstream communication at identical frequencies at the node side (network side). However, on the user side, a Cable Modem (CM) operates in Frequency Division Duplex (FDD). An example of FDX and FDD operations in the FDX band is shown in Figure 1.

In particular, the FDX band (i.e., between 108-684 MHz) may be subdivided in subbands. Consequently, a CM may operate in a specific FDD configuration. The FDD configuration may also be referred to as a Resource Block Assignment (RBA) that defines which subbands are used in what direction (i.e., upstream or downstream). For example, a system with 3 FDX subbands can support in principle variability with up to 8 possible FDD configurations (RBAs). These 8 FDD configurations (RBAs) may be represented using binary coding from 000 to 111. Assuming a "1" corresponds to upstream transmission on that subband and a "0" corresponds to downstream transmission on that subband, then one CM might operate with an RBA 100 configuration (i.e., upstream-downstream-downstream), while another CM might operate in an RBA 011 configuration (i.e., downstream-upstream-upstream). Typically, a Cable Modem Termination System (CMTS) is responsible for assigning the RBAs to cable modems, in order to mitigate the interference that the cable modems cause to each other.

Conventional Hybrid Fiber Coaxial (HFC) plants are built on the principle of FDD between upstream and downstream. Therefore, active components in the HFC plant, like the RF amplifiers distributed throughout the plant to increase reach, contain a diplexer filter to enforce this split and isolate upstream signals from downstream signals.

To allow both US and DS on the same band, viz., to achieve real full duplex, FDX DOCSIS typically assumes a fully passive cable plant (i.e., fiber to the last amplifier or N+0). This means that no amplifiers are used in the HFC cable plant. Consequently, the operators (of FDX DOCSIS) are forced to increase their fiber penetration depth to the last amplifier location before being able to deploy full duplex nodes.

However, it is generally not possible to make a high-gain amplifier that is able to amplify the same spectrum in both directions using only analog components. A "Full Duplex Amplifier" that is able to provide high-gain amplification in both directions over the same spectrum will typically have to include echo cancellation functionality, similar to FDX DOCSIS nodes, introducing issues like potential signal distortions, high complexity, and high cost for these in-field components.

Document EP3 3 89 235 A1 generally discloses an apparatus comprising a processor, a memory element, and a media access control (MAC) scheduler. The MAC scheduler is configured to implement a transmission-reception (T-R) coordination scheme among a plurality of cable modems in a cable network, wherein the cable modems are categorized into interference groups. The MAC scheduler is further configured to assign one or more of the interference groups to at least one transmission group based upon predetermined criteria; and determine an upstream bandwidth constraint and downstream bandwidth constraint for the at least one transmission group, wherein the upstream bandwidth constraint and downstream bandwidth constraint is implemented by proportionally modifying an allocated upstream bandwidth and an allocated downstream bandwidth for the at least one transmission group to require that the sum of the allocated upstream bandwidth and the allocated downstream bandwidth does not exceed a spectrum capacity for the at least one transmission group.

### Summary

In view of some or all of the above problems, the present disclosure generally proposes a method for deploying a FDX DOSIS node using a FDX band in a real full duplex manner and a control unit configured to perform such method. In particular, the proposed FDX DOCSIS can be deployed in an N+x (typically N+1 or N+2) HFC plant. Here, the "x" refers to the maximum number of amplifiers between any CM and the fiber node deployed in the cable plant (e.g., a cable television plant). More particularly, the present disclosure provides a method for deploying a FDX node in a cable system using a FDX band, a control unit for deploying a FDX node in a cable system using a FDX band, an access node deployed in a cable system and a control apparatus, having the features of respective independent claims. The dependent claims relate to preferred embodiments.

Generally speaking, the present disclosure may be realized with amplifiers that support a FDD-split somewhere within the full duplex band (possibly configurable), with a guard band located at a frequency X (108 MHz < X < 684 MHz). For instance, below the frequency X the amplifiers may only amplify signals in the upstream direction, while above the frequency X the amplifiers may only amplify signals in the downstream direction. Additionally, actual full duplex operation at the FDX node can be enabled (achieved) by assigning the CMs before and after the amplifier to different Transmission Groups (TGs), with complementary RBAs. What RBAs are used, can be dictated by the diplexer split point of the amplifier. In particular, the CMs after the amplifier may be assigned an RBA in line with the FDD capability of the amplifier (e.g., upstream at low frequencies and downstream at high frequencies), while the CMs before the amplifier may be assigned an RBA complementary to the amplifier's FDD capability (e.g., downstream at low frequencies, upstream at high frequencies). Complementary RBAs generally refer to FDD configurations that result in opposite transmission directions in a subband between the two groups of CMs (before and after the amplifier). For instance, the CMs before the amplifier may for example operate in an RBA configuration 01 (i.e., DS-US). Consequently, the CMs after the amplifier may be assigned to operate in an RBA configuration 10 (i.e., US-DS), which is complementary to the RBA configuration 01 of the CMs before the amplifier. Configured as such, full duplex operations of the FDX DOSIS node can be achieved even in an N+x cable plant.

Note that FDD amplifiers with an upstream amplification band at the low frequencies, and a downstream amplification band at the high frequencies are most attractive due to a lower hardware complexity (and hence lower cost) than an FDD amplifier with downstream amplification in the lower part of the FDX band and upstream amplification in the upper part, given the presence of legacy upstream at 5 - 85 MHz and legacy downstream above 684 MHz. The former amplifier only requires diplexer filtering with a single transition band, while the latter amplifier would require more complicated filtering with three transition bands (in increasing frequency: US-DS-US-DS), also resulting in an extra capacity loss.

As a broad example, there is provided a method for deploying a FDX node in a cable system. The cable system may be a HFC cable plant (e.g., a cable television plant). The FDX node may be a FDX DOCSIS node which may comprise at least one RF port. As mentioned above, the frequency spectrum for FDX DOCSIS can be divided into a (legacy) US only band (5 - 85 MHz), a (legacy) DS only band (684 -1218 MHz) and a full duplex band in between (108 - 684 MHz). In particular, the FDX band may be further subdivided into a plurality of subbands. By way of example, depending on different configurations, a subband always spans a single DS OFDM channel with either 96 MHz or 192 MHz bandwidth, but can span one or two US OFDMA channels, each with 96 MHz bandwidth. In the latter case, the DS channel is twice the size of the US channel. In that case, an US channel (e.g., in the form of a group of carriers or sub-carriers) only occupies part of a subband. The disclosed concept of assigning upstream/downstream transmission directions for CMs can be applied to assigning subbands or channels. Typically, multiple CMs are active on a single channel, communicating in the same direction (upstream or downstream), but they are not allowed to use the same subcarriers simultaneously to avoid collisions. The cable system may further comprise a plurality of cables that interconnect. For instance, for a HFC cable plant system, the cables may be optical fibers or coaxial cables. These collective cables may also be referred to as a cable network or a cable distribution network. The cable network is connected to the FDX node through the RF port. In this sense, from the RF port's perspective, the cable network may be referred to as a (coax) leg. The cable system may further comprise a plurality of CMs which are connected (coupled) to the cable network. The cable system may further comprise an amplifier coupled to the cable network. Consequently, such system may be referred to as an N+1 cable plant system (i.e., with one amplifier between the node and the modem). The amplifier may also be considered as being inserted at some point into the cable network, depending on the network topology. Also, how the CMs are interconnected with the amplifier may also vary depending on different circumstances (e.g., the operator's network requirements). In some examples, the CMs may not be directly connected to the amplifier via the cable network, but through at least one tap. Consequently, this manner may also be referred to as a "tapped" mode. In some other examples, the CMs may be directly connected to the amplifier via the cable network, without going through any taps. Correspondingly, this manner may also be referred to as an "express" mode. Notably, compared to the "express" mode, more CMs could be connected (served) in the "tapped" mode. The choice between the "express" mode and the "tapped" mode may be done depending on the layout of the neighborhood. However, it may be preferable to use taps in practice because more CMs being served basically also means more homes passed per node could be achieved, compared to the "express" mode. The cable system may also comprise a CMTS device coupled to the cable network. In particular, among other functionalities, the CMTS may also be responsible for assigning the respective RBA configurations to the CMs and for mitigating interferences among the CMs. The CMTS may be located either centrally in the (edge) cloud, e.g., at a so-called "headend" or "hub" site, or in the FDX node itself. For example, in a Remote-PHY deployment use case, the CMTS including the MAC layer may be located in the edge cloud, while only the physical layer processing may be in the FDX node.

The method comprises a step of assigning a first number (set) of CMs located on one side before the amplifier to a first transmission group. Similarly, the method comprises assigning a second number (set) of CMs located on another side after the amplifier to a second transmission group. Notably, depending on the actual topology of the whole cable system (including the interconnection between the CMs and the amplifier via the cable network), the CMs assigned to the first transmission group may not be physically located before the amplifier (e.g., nearer) and the CMs assigned to the second transmission group may not be physically located after the amplifier (e.g., farther away). Rather, the CMs before the amplifier should be understood as those CMs that can communicate with the FDX DOCSIS node (DS and US) directly without having to go through the amplifier. That is to say, the CMs before the amplifier are located logically before the amplifier or in other words between the FDX DOCSIS node and the amplifier. Similarly, the CMs after the amplifier should be understood as those CMs that can only communicate with the FDX DOCSIS node (DS and US) through the amplifier. In other words, the CMs after the amplifier are located logically after the amplifier.

The method further comprises a step of assigning a first configuration set of transmission directions of the respective subbands in the FDX band to the CMs in the first transmission group and a second configuration set of transmission directions of the respective subbands in the FDX band to the CMs in the second transmission group. In particular, the same first configuration set is used among the CMs in the first transmission group and the same second configuration set is used among the CMs in the second transmission group. More particularly, for at least two subbands (e.g., the outmost two subbands), the respective transmission direction (DS or US) of that subband in the first configuration set is assigned to be complementary to the respective transmission direction of the respective subband in the second configuration set. In other words, the transmission direction assigned to the first transmission group is complementary (opposite) to the transmission direction assigned to the second transmission group. For instance, if a direction of DS is assigned to the first transmission group for that subband, a direction of US (which is complementary to the DS direction) is assigned to the second transmission group, and vice versa. Configured as such, full duplex operation of the FDX DOSIS node can be achieved even in an N+x cable plant system.

In some examples, the method may comprise determination of the first number (set) of CMs before the amplifier and the second number (set) of CMs after the amplifier. In some cases, such determination may be performed by a downstream channel acquisition procedure or an upstream channel ranging procedure. In particular, the upstream ranging procedure, which is typically performed before a sounding procedure, may begin with an initial ranging when a CM sends a range request at the lowest allowable transmit power to the control unit or CMTS and gradually increases the transmit power (e.g., by a step of 3dB) for retransmission of the range request, if the CM does not receive a range response from the control unit or CMTS. Consequently, assuming the amplifier has a FDD capability of allowing only US below the split frequency and only DS above the split frequency, the US ranging procedure will not be able to succeed in channels above the FDD split frequency for those CMs after the amplifier (i.e., in the second transmission group) simply because their US signals would be strongly attenuated (filtered) by the filter(s) inside the amplifier. Thus, the failure of the US ranging procedure as illustrated above may be used as an indication of CMs located (logically) after the amplifier. Confidence in this determination can be increased by using ranging requests on multiple US OFDMA channels located above the amplifier split frequency. Similarly, a failure of a CM to acquire any DS channel below the split frequency could be used as well for identifying that said CM must be located after the amplifier. As a consequence, the (logical) location of all the CMs (i.e., whether they are before or after the amplifier) can be successfully and correctly determined.

In some examples, the amplifier may comprise a frequency split point within the FDX band.

Typically, the amplifier may further comprise an unusable guard band around (below and above) the split frequency within the FDX band (e.g., for reasons of interference prevention). Typically, the guard band is roughly 15 - 20% of its center frequency (split frequency). By way of example, for a split frequency set at 396 MHz, the corresponding guard band may be set to around 60 - 80 MHz. Configured as such, the amplifier may only amplify signals in one transmission direction (e.g., US) below the split frequency and only amplify signals in another (opposite) transmission direction (e.g., DS) above the split frequency. Such behavior of the amplifier may also be referred to as the FDD capability of the amplifier.

In some examples, when assigning the first and second configuration sets, the second configuration set of transmission directions of the second transmission group is assigned in correspondence with (or similar to) the FDD capability of the amplifier. For instance, if the amplifier only amplifies signals in the upstream direction below the split frequency and only amplifies signals in the downstream direction above the split frequency, the CMs after the amplifier (i.e., the second transmission group) may be assigned with a configuration set which is in line with the FDD capability of the amplifier, i.e., upstream at low frequencies and downstream at high frequencies. Correspondingly, the CMs before the amplifier may be assigned with configuration set which is complementary to the FDD capability of the amplifier, i.e., downstream at low frequencies and upstream at high frequencies.

In some examples, due to the existence of the guard band of the amplifier, at least one subband which overlaps (or partially overlaps) with the guard band may not be fully useable for the CMs after the amplifier (in the second transmission group). That is to also say, a portion of a subband that overlaps (or partially overlaps) with the guard band may not be assigned for communication to the second transmission group. On the other hand, the CMs before the amplifier (in the first transmission group) are in principle not affected by the guard band of the amplifier, since the communication between the CMs of the first transmission group and the FDX DOCSIS node does not need to go through the amplifier. That is to say, the CMs in the first transmission group may be principally able to utilize all the channels within the FDX band, or in other words, the portion of the subband that overlaps (or partially overlaps) with the guard band is assigned for communication to the first transmission group. However, in some cases, it is possible that some channels (or some parts of a subband) are not used by the first transmission group (e.g., depending on specific design requirements or system constraints, or for equalizing the US and DS data rate capabilities of the respective transmission groups).

In some examples, the FDX node may be a FDX DOCSIS node. In this case, the first and second configuration sets of transmission directions may be achieved or implemented by means of RBAs. That is to say, the first configuration set of the first transmission group may be assigned with a RBA which is complementary to the corresponding RBA assigned to the second transmission group. For instance, if the first transmission group is assigned with a RBA configuration of 001 (the same notation as illustrated above), the second transmission group is then assigned with a complementary RBA configuration of 110.

In some examples, depending on the desired Service Level Agreement (SLA) offering, the location of the guard band of the FDD-split may be configured (optimized), and in some cases might be fully contained within a FDX subband, instead of being located at the edge. Correspondingly, due to the shift of the unusable guard band, the respective RBAs assigned to the first and second transmission groups may also need to be adapted (changed). In some cases, the first transmission group and the second transmission group may be assigned with respective RBAs such that symmetric downstream and upstream capacities are achieved in both the transmission groups. In particular, the symmetric downstream and upstream peak capacity may be understood as that the number of upstream channels and the downstream channels assignable to the first transmission group and the second transmission group are equal or nearly (almost) equal. Compared to the asymmetric scenarios where either DS or US has a higher capacity (peak data rate), the symmetry may be achieved by shifting (configuring) the flip frequency and/or the guard band of the amplifier. Notably, achieving symmetric peak capacities (data rate) in DS and US within the FDX band might only be achievable at a price of losing some amount of capacity in at least one of the transmission groups when operating in asymmetric configurations. This also implies that some portions of the subband in the FDX band might not be used by at least one transmission groups (e.g., the first transmission group), not simply because the those portions overlap with the guard band of the amplifier, but because the guard band is fully contained within a subband, and the fact that the second transmission group can only use it in one direction below the guard band and in the opposite direction above the guard band (due to the amplifier). In some cases, this symmetry may cause not perfectly complementary RBAs assigned to the first and second transmission groups. Nevertheless, at least for those subbands which are assigned to both transmission groups (i.e., the outmost subbands), the first and second configuration sets of transmission directions would still be complementary. In other words, in some embodiments, an inner subband which is affected by the split point and guard band of the amplifier (e.g., when the frequency split point is arranged within the frequency range of the subband) may not be assigned with complementary RBAs for the transmission groups. Portions of such inner subband (e.g., a channel outside the guard band) may be used by both transmission groups for communications in the same direction, for example to obtain a more symmetric downstream and upstream capacity. Nevertheless, other subbands whose frequency ranges do not include the amplifier split point (e.g., outer subbands arranged outwardly in frequency from the inner subband) can still be assigned with complementary RBAs.

In some examples, at least one subband within the FDX band may be assigned for communication in both transmission directions simultaneously. In other words, at least one subband within the FDX band may be jointly used by both the first and second transmission groups wherein complementary transmission directions are assigned as illustrated above. Configured as such, true full duplex operations can be achieved (at least in said subbands) within the FDX band.

In some examples, the cable system may further comprise at least one second amplifier and a plurality of further CMs coupled to the cable network such that the CMs are directly or indirectly connected to the second amplifier. Accordingly, such system may also be referred to as an N+2 cable plant (i.e., with in total two amplifiers), an N+3 cable plant (i.e., with in total three amplifiers), and so forth. In this case, the method may comprise assigning those further CMs which are located after the second amplifier also to the second transmission group, together with those CMs which are located after the (first) amplifier. In other words, the CMs which would be affected by at least one amplifier may be assigned to the second transmission groups, while only the CMs before the (first) amplifier may be assigned to the first transmission groups. Assuming that all the amplifiers have similar FDD capacities (e.g., allowing US in low frequencies and DS in high frequencies), the method may continue with assigning complementary configuration sets of transmission directions to the first transmission group and the second transmission group respectively, as illustrated above.

In some examples, the FDX node may comprise more than one RF ports to which respective cable networks (legs) are connected. In this case, the proposed method may be applied on a per port (leg) basis to assign the CMs coupled with this leg to respective TGs and thereby configure their FDX capabilities.

In some examples, for the completeness of the operations of the whole cable system, it may further comprise a step of sending (notifying) the assignment configurations (e.g., transmission groups, transmission directions, RBAs) to the CMs within the cable systems, so that the CMs can correctly interact/communicate with the FDX DOCSIS node for performing data transmission and reception operations. The communication capabilities of the CMs are then configured based on the assignment configurations. Thus, the cable system can be operational successfully in a full duplex manner.

As another broad example, there is provided a control unit for deploying a FDX node in a cable system. The cable system may be a HFC cable plant (e.g., a cable television plant). The FDX node may be a FDX DOCSIS node which may comprise at least one RF port. As mentioned above, the frequency spectrum for FDX DOCSIS can be divided in to a (legacy) US only band (5 - 85 MHz), a (legacy) DS only band (684 - 1218 MHz) and a full duplex band in between (108 - 684 MHz). In particular, the FDX band may be further subdivided into a plurality of subbands. By way of example, depending on different configurations, a subband always spans a single DS OFDM channel with either 96 MHz or 192 MHz bandwidth, but can span one or two US OFDMA channels, each with 96 MHz bandwidth. In the latter case, the DS channel is twice the size of the US channel. In that case, an US channel (e.g., in the form of a group of carriers or sub-carriers) only occupies part of a subband. The disclosed concept of assigning upstream/downstream transmission directions for CMs can be applied to assigning subbands or channels. Typically, multiple CMs are active on a single channel, communicating in the same direction (upstream or downstream), but they are not allowed to use the same subcarriers simultaneously to avoid collisions. The cable system may further comprise a plurality of cables that interconnect. For instance, for a HFC cable plant system, the cables may be optical fibers or coaxial cables. These collective cables may also be referred to as a cable network or a cable distribution network. The cable network is connected to the FDX node through the RF port. In this sense, from the RF port's perspective, the cable network may be referred to as a (coax) leg. The cable system may further comprise a plurality of CMs which are connected (coupled) to the cable network. The cable system may further comprise an amplifier coupled to the cable network. Consequently, such system may be referred to as an N+1 cable plant system (i.e., with one amplifier between the node and the modem). The amplifier may also be considered as being inserted at some point into the cable network, depending on the network topology. Also, how the CMs are interconnected with the amplifier may also vary depending on different circumstances (e.g., the operator's network requirements). In some examples, the CMs may not be directly connected to the amplifier via the cable network, but through at least one tap. Consequently, this manner may also be referred to as a "tapped" mode. In some other examples, the CMs may be directly connected to the amplifier via the cable network, without going through any taps. Correspondingly, this manner may also be referred to as an "express" mode. Notably, compared to the "express" mode, more CMs could be connected (served) in the "tapped" mode. The choice between the "express" mode and the "tapped" mode may be done depending on the layout of the neighborhood. However, it may be preferable to use taps in practice because more CMs being served basically also means more homes passed per node could be achieved, compared to the "express" mode. The cable system may also comprise a CMTS device coupled to the cable network. In particular, among other functionalities, the CMTS may also be responsible for assigning the respective RBA configurations to the CMs and for mitigating interferences among the CMs. The CMTS may be located either centrally in the (edge) cloud, e.g., at a so-called "headend" or "hub" site, or in the FDX node itself. For example, in a Remote-PHY deployment use case, the CMTS including the MAC layer may be located in the edge cloud, while only the physical layer processing may be in the FDX node.

The control unit is may configured to assign a first number of CMs located on one side before the amplifier to a first transmission group and a second number of CMs located on another side after the amplifier to a second transmission group. Notably, depending on the actual topology of the whole cable system (including the interconnection between the CMs and the amplifier via the cable network), the CMs assigned to the first transmission group may not be physically located before the amplifier (e.g., nearer) and the CMs assigned to the second transmission group may not be physically located after the amplifier (e.g., farther away). Rather, the CMs before the amplifier should be understood as those CMs that can communicate with the FDX DOCSIS node (DS and US) directly without having to go through the amplifier. That is to say, the CMs before the amplifier are located logically before the amplifier or in other words between the FDX DOCSIS node and the amplifier. Similarly, the CMs after the amplifier should be understood as those CMs that can only communicate with the FDX DOCSIS node (DS and US) through the amplifier. In other words, the CMs after the amplifier are located logically after the amplifier.

The control unit is further configured to assign a same first configuration set of transmission directions of the respective subbands in the FDX band to the CMs in the first transmission group and a same second configuration set of transmission directions of the respective subbands in the FDX band to the CMs in the second transmission group. In particular, the same first configuration set is used among the CMs in the first transmission group and the same second configuration set is used among the CMs in the second transmission group. More particularly, for at least two subbands (e.g., the outmost two subbands), the respective transmission direction (DS or US) of that subband in the first configuration set is assigned to be complementary to the respective transmission direction of the respective subband in the second configuration set. In other words, the transmission direction assigned to the first transmission group is complementary (opposite) to the transmission direction assigned to the second transmission group. For instance, if a direction of DS is assigned by the control unit to the first transmission group for that subband, a direction of US (which is complementary to the DS direction) would be assigned by the control unit to the second transmission group, and vice versa. Configured as such, full duplex operation of the FDX DOSIS node can be achieved even in an N+x cable plant system.

In some examples, the amplifier comprises a frequency split point within the FDX band. Typically, the amplifier may further comprise an unusable guard band around (below and above) the split frequency within the FDX band (e.g., for reasons of interference prevention).

Typically, the guard band may be roughly 15 - 20% of its center frequency (split frequency). By way of example, for a split frequency set at 396 MHz, the corresponding guard band may be set to around 60 - 80 MHz. Configured as such, the amplifier may only amplify signals in one transmission direction (e.g., US) below the split frequency and only amplify signals in another (opposite) transmission direction (e.g., DS) above the split frequency. Such behavior of the amplifier may also be referred to as the FDD capability of the amplifier.

When assigning the first and second configuration sets, the control unit is configured to assign the second configuration set of transmission directions of the second transmission group corresponding to (or similar to) the FDD capability of the amplifier. For instance, if the amplifier only amplifies signals in the upstream direction below the split frequency and only amplifies signals in the downstream direction above the split frequency, the control unit may then be configured to assign the CMs after the amplifier (i.e., the second transmission group) with configuration set which is in line with the FDD capability of the amplifier, i.e., upstream at low frequencies and downstream at high frequencies. Correspondingly, control unit may also be configured to assign the CMs before the amplifier with configuration set which is complementary to the FDD capability of the amplifier, i.e., downstream at low frequencies and upstream at high frequencies.

In some examples, due to the existence of the guard band of the amplifier, at least one subband which overlaps (or partially overlaps) with the guard band may not be fully useable for the CMs after the amplifier (in the second transmission group). That is to also say, a portion of a subband that overlaps (or partially overlaps) with the guard band may not be assigned for communication to the second transmission group. On the other hand, the CMs before the amplifier (in the first transmission group) may be in principle not affected by guard band of the amplifier, since the communication between the CMs of the first transmission group and the FDX DOCSIS node does not need to go through the amplifier. That is to say, the CMs in the first transmission group may be principally able to utilize all the channels within the FDX band, or in other words, the portion of the subband that overlaps (or partially overlaps) with the guard band may be assigned for communication to the first transmission group. However, in some cases, it is possible that the control unit is configured to not assign some channel to the first transmission group (e.g., depending on specific design requirements or system constraints, or for equalizing the US and DS data rate capabilities of the respective transmission groups).

In some examples, the FDX node may be a FDX DOCSIS node and the first and second configuration sets of transmission directions may be achieved by means of RBAs. In this case, the control unit may be configured to assign the first transmission group and the second transmission group with complementary RBAs. That is to say, the first configuration set of the first transmission group may be assigned with a RBA which is complementary to the corresponding RBA assigned to the second transmission group. For instance, if the control unit is configured to assign the first transmission group with a RBA configuration of 001 (the same notation as illustrated above), the control unit may then be configured to assign the second transmission group with a complementary RBA configuration of 110.

In some other examples, depending on the desired Service Level Agreement (SLA) offering, the location of the guard band of the FDD-split may be configured (optimized), and in some cases might be fully contained within a FDX subband, instead of being located at the edge. Correspondingly, due to the shift of the unusable guard band, the respective RBAs assigned by the control unit to the first and second transmission groups may also need to be adapted (changed). In some cases, the first transmission group and the second transmission group may be assigned with respective RBAs such that symmetric downstream and upstream capacities are achieved in both the transmission groups. In particular, the symmetric downstream and upstream peak capacity may be understood as that the number of upstream channels and the number of downstream channels assignable to the first transmission group and the second transmission group are equal or nearly equal. Compared to the asymmetric scenarios where either DS or US has a higher capacity (i.e., peak data rate), the symmetry may be achieved by shifting (configuring) the flip frequency and/or the guard band of the amplifier. Notably, achieving symmetric peak capacities (data rate) in DS and US within the FDX band may only be achievable at a price of losing some amount of capacities in at least one of the transmission groups when operating in asymmetric configurations. This also implies that the control unit may be configured to force at least one transmission groups (e.g., the first transmission group) not to use some channels (or parts of a subband), not simply because the those portions overlap with the guard band of the amplifier, but because the guard band is fully contained within a subband and the fact that the second transmission group can only use it in one direction below the guard band and in the opposite direction above the guard band (due to the amplifier). In some cases, this symmetry may cause not perfectly complementary RBAs assigned to the first and second transmission groups. Nevertheless, at least for those subbands which are assigned to both transmission groups (i.e., the outmost subbands), the first and second configuration sets of transmission directions would still be complementary. In other words, in some embodiments, an inner subband which is affected by the split point and guard band of the amplifier (e.g., when the frequency split point is arranged within the frequency range of the subband) may not be assigned with complementary RBAs for the transmission groups. Portions of such inner subband (e.g., a channel outside the guard band) may be used by both transmission groups for communications in the same direction, for example to obtain a more symmetric downstream and upstream capacity. Nevertheless, other subbands whose frequency ranges do not include the amplifier split point (e.g., outer subbands arranged outwardly in frequency from the inner subband) can still be assigned with complementary RBAs.

In some examples, the control unit may be further configured to determine the first number of CMs before the amplifier and the second number of CMs after the amplifier. In some cases, such determination may be performed by a downstream channel acquisition procedure or an upstream channel ranging procedure, as briefly illustrated above. As a consequence of the DS channel acquisition procedure and/or the US ranging procedure, the (logical) location of the CMs (i.e., whether they are coupled with the cable network before or after the amplifier) can be successfully and correctly determined.

In some examples, the cable system may further comprise at least one second amplifier and a plurality of further CMs coupled to the cable network such that the CMs are interconnected to the second amplifier in a direct or indirect manner. In this case, the control unit may be further configured to assign those further CMs which are located after the second amplifier also to the second transmission group, together with those CMs which are located after the (first) amplifier. In other words, the CMs which would be affected by at least one amplifier may be assigned to the second transmission groups, while only the CMs before the (first) amplifier may be assigned to the first transmission groups. Assuming that all the amplifiers have similar FDD capacities (e.g., allowing US in low frequencies and DS in high frequencies), the control unit may continue to assign complementary configuration sets of transmission directions to the first transmission group and the second transmission group respectively, as illustrated above.

In some examples, the FDX node may comprise more than one RF port, each RF port connected with a separate (coaxial) cable network (leg) for communicating with CMs coupled to the respective cable network. In this case, the proposed control unit may be configured to apply the method on a per port (leg) basis.

In some examples, for a complete description of the operations of the whole cable system, the control unit may further be configured to send (notify) the assignment configurations (e.g., transmission groups, transmission directions) to the CMs within the cable systems (via the cable network), so that the CMs can correctly interact/communicate with the FDX DOCSIS node for performing data transmission and reception operations. Thus, the cable system can be operational successfully in a full duplex manner.

Notably, such control unit may be embodied within an existing system component (e.g., within the network node, or the CMTS) or may be embodied as a standalone system component of the cable system.

As yet another broad example, there is provided a cable modem configured according to the method illustrated above. In other words, the cable modem may receive the assignment configurations (e.g., transmission groups, transmission directions, etc.) performed as above. The cable mode may then be configured according to the received assignment configurations such that communication (DS or US) with other components (e.g., the FDX node) within the cable system can be successfully achieved.

As yet another broad example, there is provided an access node deployed in a cable system. The access node may comprise a control unit configured as illustrated above.

As yet another broad example, there is provided a control apparatus. The apparatus may comprise a processor and a memory. The memory may include computer instructions. When executed, the computer instructions may be configured to, with the processor, cause the apparatus to perform the method as illustrated above. The apparatus may be located in a cloud of an access network for controlling operation of a Full Duplex, FDX, node in a cable system using a FDX band divided into subbands.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors.

Other and further embodiments of the present invention will become apparent during the course of the following discussion and by reference to the accompanying drawings.

### Brief Description of the Figures

Embodiments of the disclosure are explained below in an exemplary manner with reference to the accompanying drawings, wherein
Figure 1 schematically illustrates an example of FDX operations on the network side and FDD operations the user side, respectively;
Figure 2 schematically illustrates an example of a DOCSIS node on a HFC plant with amplifiers that enforce a FDD division between US and DS;
Figure 3 schematically illustrates an exemplary use case according to an embodiment of the present invention;
Figure 4 schematically illustrates another exemplary use case according to an embodiment of the present invention;
Figure 5 schematically shows another exemplary use case according to an embodiment of the present invention;
Figure 6 schematically shows an exemplary N+3 HFC network deployment; and
Figure 7 schematically shows an exemplary method according to an embodiment of the present invention.

### Detailed Description

The proposed method and control apparatus can be used for deploying and operating a FDX DOSIS node deployed in an N+x (typically N+1 or N+2) HFC cable plant (cable system) in a real full duplex manner.

According to a broad aspect, there is disclosed a cable system. The cable system may be embodied as a HFC cable plant (e.g., a cable television plant) or any other suitable cable plant. The cable system may comprise a cable network (cable distribution network) formed by a plurality of cables that interconnect. For instance, for a HFC cable plant system, the cables may be embodied as optical fibers or coaxial cables. The cable system may also comprise a FDX node deployed in the cable system and configured to operate on a FDX band (i.e., 108 - 684 MHz). The FDX node may be a FDX DOCSIS node. The cable system may further comprise a plurality of CMs which are connected (coupled) to the cable network. The cable system may further comprise an amplifier coupled to the cable network. Consequently, such system may be referred to as an N+1 cable plant system (i.e., with one amplifier). The amplifier may also be considered as being inserted at some point into the cable network, depending on the network topology. Also, how the CMs are interconnected with the amplifier may also vary depending on different circumstances (e.g., the operator's network requirements). In some cases, the CMs may not be directly connected to the amplifier via the cable network, but through at least one tap. Consequently, this manner may also be referred to as a "tapped" mode. In some other cases, the CMs may be directly connected to the amplifier via the cable network, without going through any taps. Correspondingly, this manner may also be referred to as an "express" mode. Notably, compared to the "express" mode, more CMs could be connected (served) in the "tapped" mode. The choice between the "express" mode and the "tapped" mode may be done depending on the layout of the neighborhood. However, it may be preferable to use taps in practice because more CMs being served basically also means more homes passed per node could be achieved, compared to the "express" mode. The cable system may also comprise a CMTS device coupled to the cable network. In particular, among other functionalities, the CMTS may also be responsible for assigning the respective RBA configurations to the CMs and for mitigating interferences among the CMs. The CMTS may be located either centrally in the (edge) cloud, e.g., at a so-called "headend" or "hub" site, or in the FDX node itself. For example, in a Remote-PHY deployment use case, the CMTS including the MAC layer may be located in the edge cloud, while only the physical layer processing may be in the FDX node. Finally, the cable system may comprise a control unit configured to perform the operations as illustrated above. Notably, such control unit may be embodied within an existing system component (e.g., within the network node, or the CMTS) or may be embodied as a standalone system component of the cable system.

Figure 1 schematically illustrates an example of FDX operations on the network side and FDD operations on the user side, respectively. In particular, chart 110 shows an exemplary illustration of a full duplex operation at the network node side on the FDX band defined by FDX DOCSIS. The horizontal axis represents the channel frequency in an increasing order (from 0 to 1218MHz). Notably, as defined by FDX DOCSIS, the entire frequency spectrum is divided into three portions, namely a legacy US band 112 between 5 - 85 MHz, a legacy DS band 116 between 684 - 1218 MHz, and a full duplex band 114 which can be shared between both US and DS signals between 108 - 684 MHz. By introducing echo cancellation functionality, the FDX DOCSIS node is able to utilize the FDX band in a real full duplex manner. That is to say, the FDX DOCSIS node can use the channels in the FDX band in both upstream and downstream directions at the same time, as shown in Figure 1 as 114-1 (US) and 114-2 (DS) respectively.

On the other hand, chart 120 shows an exemplary illustration of a frequency division duplex operation at the user side (i.e., CM) on the FDX band defined by FDX DOCSIS. Similar to that in chart 110, the horizontal axis here also represents the channel frequency in an increasing order (from 0 to 1218 MHz). The whole bandwidth is also divided into three portions, namely a legacy US band 122 between 5 - 85 MHz, a legacy DS band 126 between 684 - 1218 MHz, and a full duplex band 124 which can be shared between both US and DS signals between 108 - 684 MHz. However, due to the interference amongst the CMs, each CM can operate only in a specific FDD setting or RBA defining which channels (bands) are used in what specific direction (upstream or downstream) at a given time. In the present example as shown in chart 120, the frequency spectrum 124-1 is configured to be upstream while the frequency spectrum 124-2 is configured to be downstream.

Typically, conventional HFC plants are built on the principle of FDD between upstream and downstream. All active components in the HFC plant, like the DOCSIS nodes and cable modems, but also the RF amplifiers distributed throughout the plant to increase reach, contain a diplexer filter to enforce this split and isolate upstream from downstream.

In addition to introducing echo cancellation at the node on the FDX band, i.e., from 108 MHz to 684 MHz, FDX DOCSIS also specifies certain MAC layer operations that are essential for full duplex, which can be summarized as follows:
- grouping the CMs into Interference Groups (IGs);
- grouping IGs into Transmission groups (TGs).

In particular, an Interference Group is a group of CMs that interfere with each other. The CMTS uses a so-called "sounding process" to measure the CM-to-CM interference (between upstreaming and downstreaming CMs) in order to decide on IG groupings. On the other hand, TGs may be considered as logical grouping of IGs. Consequently, all the CMs in the same TG group will have the same FDD configuration (US and DS allocation on the FDX band) or RBA, so that the CMs in each TG do not interfere with each other.

The sounding process is controlled by the CMTS or FDX node and consists of assigning certain CMs, called Test CMs, to transmit predefined sounding signals at a certain time and on certain frequencies. During that transmission, other CMs, the Measurer CMs, measure the SNR values that they are able to achieve under the interference from these Test CMs. By cycling through different Test and Measurer CMs, which introduces overhead and complexity to the operations, the CMTS can measure the interference impact between any two CMs.

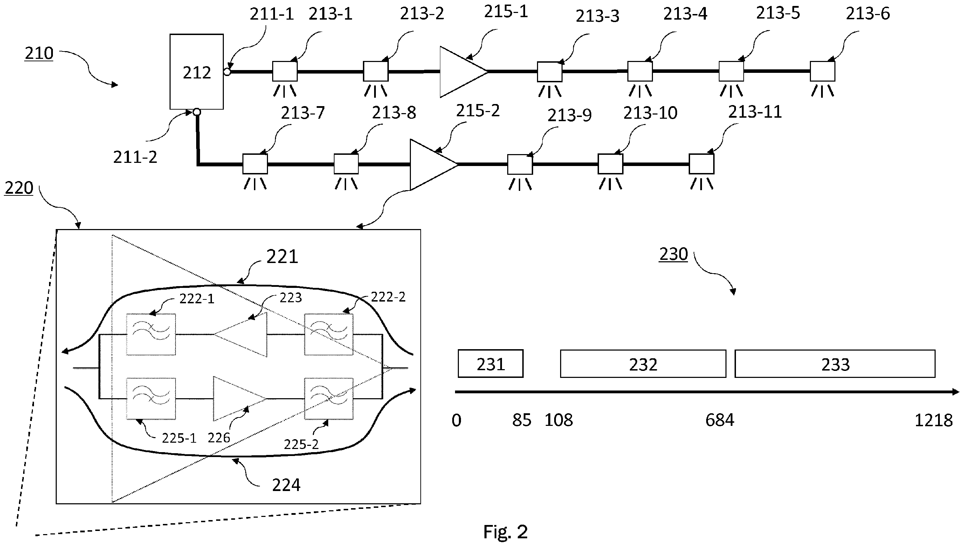

Figure 2 schematically illustrates an example of a DOCSIS node with two RF ports deployed on an HFC plant with amplifiers that enforce a FDD division between US and DS. In particular, the upper chart 210 shows an exemplary topology of a cable plant. A DOCSIS node 212 comprises two RF ports 211-1 and 211-2 connected with a distributed cable network. Further, a plurality of CMs and amplifiers are also distributed and coupled to the cable network in the cable plant. In the present example, six taps 213-1, 213-2, 213-3, 213-4, 213-5 and 213-6, each of which serving one or more CMs, and one amplifier 215-1 are coupled to the first port 211-1 of the DOCSIS node 212 via the cable network. Similarly, further five taps 213-7, 213-8, 213-9, 213-10 and 213-11, each of which serving one or more CMs, and another amplifier 215-2 are coupled to the second port 211-2 of the DOCSIS node 212 via the cable network. Configured as such, the node 212 can communicate with the CMs on a specific channel. A CMTS may also be comprised in the cable plant which is not shown in Figure 2. The CMTS may be located either centrally in the (edge) cloud, e.g., at a so-called "headend" or "hub" site, or in the FDX node itself. For example, in a Remote-PHY deployment use case, the CMTS including the MAC layer may be located in the edge cloud, while only the physical layer processing may be in the FDX node.

The lower left chart 220 shows an exemplary simplified implementation of the amplifier 215-2. In particular, the upper path 221 shows a possible implementation of upstream direction, which comprises two low pass filters 222-1 and 222-2 and a power amplifier 223 coupled between the two low pass filters 222-1 and 222-2. Typically, the combination of a low pass filter and a high pass filter connected to a common port is also referred to as a diplexer. In this sense, the amplifier may also be considered as comprising two diplexer filters. Configured as such, the amplifier 215-2 can only amplify signals in the low frequency bands in the upstream direction path 221 indicated by the arrow (i.e., from right to left), since the high frequency signals would be filtered out by the low pass filters 222-1 and 222-2. Similarly, the lower path 224 shows a possible implementation of downstream direction, which comprises two high pass filters 225-1 and 225-2 and a power amplifier 226 coupled between the two high pass filters 225-1 and 225-2. Configured as such, the amplifier 215-2 can only amplifier signals in the high frequency bands in the downstream direction path 224 indicated by the arrow (i.e., from left to right), since the low frequency signals would be filtered out by the high pass filters 225-1 and 225-2.

The lower right chart 230 shows an exemplary operation of the amplifier, known as "mid-split". As shown in the chart 230, the whole bandwidth is divided into three portions, i.e., a legacy US band 231, a single (DS) band 232 and legacy DS band 233. However, in the present example, due to the existence and the configuration of filters included in the amplifier, a FDD division is enforced between the US and DS. Referring to the chart 230, due to the low pass filters 222-1 and 222-2, the legacy US band 231 (i.e., 5 - 85 MHz) is used as the return band of the amplifier. On the other hand, due to the high pass filters 225-1 and 225-2, the single DS band 232 and the legacy DS band (i.e., 108 - 1218 MHz) are used as the forward band of the amplifier.

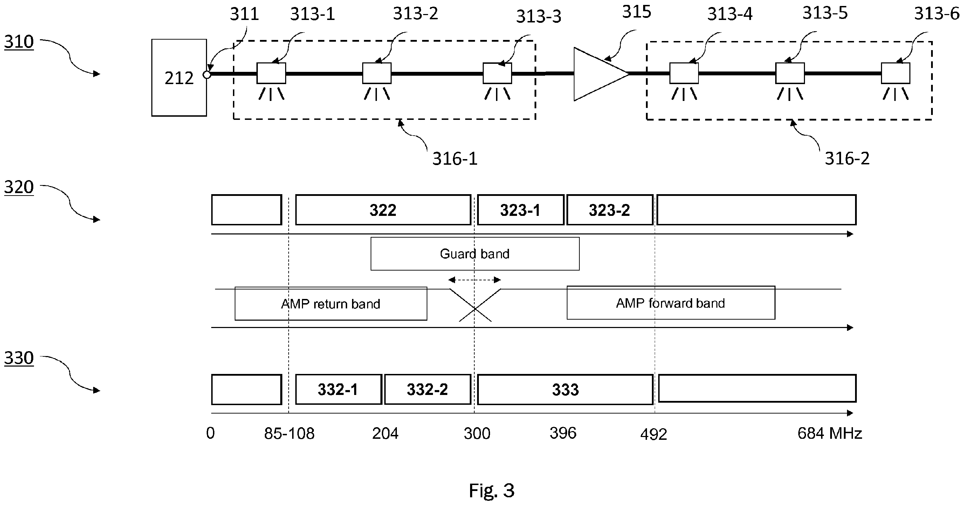

Figure 3 schematically illustrates an exemplary use case according to an embodiment of the present invention. In particular, the upper chart 310 shows an exemplary topology of a cable plant comprising a FDX node (e.g., a FDX DOCSIS node) 312 with one RF port 311, six taps 313-1, 313-2, 313-3, 313-4, 313-5, 313-6 (each of which serving one or more CMs) and an amplifier 315 coupled to the FDX DOCSIS node 312 via a cable network. Notably, like reference numbers in the chart 310 indicate like or similar elements in the chart 210 of Figure 2, such that repeated description thereof may be omitted for reasons of conciseness.

Furthermore, in the present case, the FDX band (i.e., 108-492 MHz) is divided into two FDX subbands, namely one subband between 108 - 300 MHz and another subband between 300 - 492 MHz. Depending on circumstances, the subband may be further sub-divided (into smaller granularities). In the present example, a traditional, diplexer-based amplifier 315 may be used.

Now, as can be seen from the topology chart 310, the part of the cable plant before the amplifier 315 is considered to be "passive" from the perspective of the FDX node 312, while the other part after the amplifier 315 is considered to be "active", with all signals needing to pass through the amplifier 315.

In order to achieve real full duplex operations, the CMs (which are coupled to the taps) may be firstly grouped based on their logical location relative to the amplifier 315. Referring to the present example as shown in the chart 310, the CMs coupled to the taps 313-1, 313-2 and 313-3 which are located logically before the amplifier 315 are assigned to the first transmission group 316-1. Similarly, the CMs coupled to the taps 313-4, 313-5, and 313-6 which are located logically after the amplifier 315 are assigned to the second transmission group 316-2. That is to say, the CMs coupled to the taps 313-1, 313-2 and 313-3 which can communicate with the FDX DOCSIS node 312 directly without having to go through the amplifier 315 ("passive") or in other words are located between the FDX DOCSIS node 312 and the amplifier 315, are assigned to the first transmission group 316-1. Similarly, the CMs coupled to the taps 313-4 and 313-5 which can only communicate with the FDX DOCSIS node 312 through the amplifier 315 ("active"), are assigned to the second transmission group 316-2.

Subsequently, the grouped first transmission group 316-1 and the second transmission group 316-2 may be assigned with respective sets of configurations with complementary transmission directions. As shown in the bottom chart 330 of the present example, the CMs assigned in the second transmission group 316-2 after the amplifier 315 are assigned to operate in the US on a first subband 332 (i.e., 108 - 300 MHz) while to operate in the DS on a second subband 333 (i.e., 300 - 492 MHz), corresponding to the FDD capability of the amplifier 315 (allowing US in the low frequencies and allowing DS in the high frequencies). Notably, in the present example, the first subband 332 (i.e., 108 - 300 MHz) is further divided into two upstream channels, between 108 - 204 MHz and between 204 - 300 MHz respectively. Further, it is also to be noted that only a part of the second channel, i.e., from 204 - 300 MHz, might actually be used for upstream signaling, since the amplifier 315 is assumed to have a guard band. Similarly, a part of the subband (i.e., from 300 - 492 MHz) may also not be exploited due to the guard band. However, it is also possible for the second transmission group to use the OFDMA channel overlapping with the guard band, albeit at reduced performance due to the filter attenuation in this region.

On the other hand, regarding the CMs in the first transmission group 316-1 before the amplifier 315, the assignment of configurations of respective subband directions is shown in the middle chart 320. In particular, the CMs in the first transmission group 316-1 are assigned with configurations which are complementary to those assigned to the second transmission group 316-2, or more generally, complementary to the FDD capability of the amplifier 315. As can be seen from the chart 320, the CMs in the first transmission group 316-1 before the amplifier 315 are assigned to operate in the DS on a first subband 322 (i.e., 108 - 300 MHz) while to operate in the US on a second subband 323 (i.e., 300 - 492 MHz). Similar to the US bands in the chart 330, the US band 323 is also sub-divided into two upstream channels (subbands). However, it is to be noted that, the CMs in the first transmission group 316-1 before the amplifier 315 do not experience the capacity loss related to the guard band of the diplexer in the amplifier 315 and therefore have access to more upstream and downstream capacity than the CMs in the second transmission group 316-2 after the amplifier 315.

It is to be noted that, in the present example, the CMs in the second transmission group 316-2 after the amplifier may be assigned to a RBA configuration of 10 (assuming a "0" indicates DS direction and a "1" indicates a US direction). Accordingly, the CMs in the first transmission group 316-1 before the amplifier may then be assigned with a RBA configuration of 01.

It is yet further to be noted that the CMs before the amplifier 315 can also access the legacy upstream band from 5 to 85 MHz, in addition to those US channels assigned within the FDX band. Similarly, the CMs after the amplifier 315 can also access the legacy US band, in addition to those US channels assigned within the FDX band. The number of users (CMs) sharing the upstream band is significantly decreased compared to an FDD approach (which typically uses only half of its full capacity), which eventually yields a lower probability of contention. Configured as such, actual full duplex operation can be achieved at the FDX node.

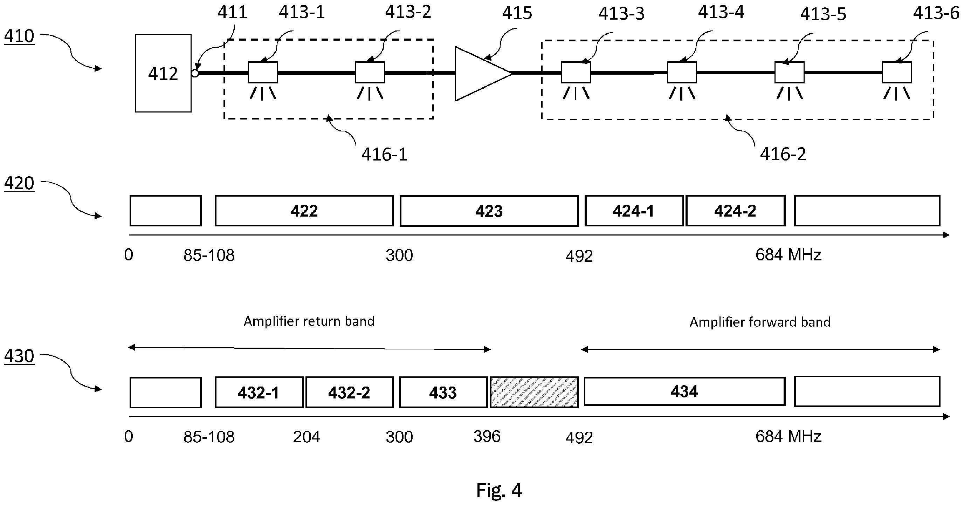

Figure 4 schematically illustrates another exemplary use case according to an embodiment of the present invention. In particular, the upper chart 410 shows an exemplary topology of a cable plant comprising a FDX DOCSIS node 412 with one RF port 411, six taps 413-1, 413-2, 413-3, 413-4, 413-5, 413-6 (each of which serving one or more CMs) and an amplifier 415 coupled to the FDX DOCSIS node 412 via a cable network. Notably, like reference numbers in the chart 410 indicate like or similar elements in the chart 310 of Figure 3, such that repeated description thereof may be omitted for reasons of conciseness.

Furthermore, in the present case, the FDX band (i.e., 108 - 684MHz) is divided into three FDX subbands, namely one subband between 108-300 MHz, another subband between 300 - 492 MHz and a third subband between 492 - 684 MHz. Depending on circumstances, the subband may be further sub-divided (into smaller granularities). Additionally, the amplifier 415 is assumed to have the following FDD split configuration:
- an upstream (return) band ranges from 5 to 396 MHz (including the legacy US band);
- a downstream (forward) band ranges from 492 to 1218 MHz (including the legacy DS band); and
- a diplexer guard band (filter transition band) located between 396 and 492 MHz. (assuming that typical guard bands are around 15 to 20% of the center frequency).

Now, as can be seen from the topology chart 410, the part of the cable plant before the amplifier 415 is considered to be "passive" from the perspective of the FDX node 412, while the other part after the amplifier 415 is considered to be "active", with all signals needing to pass through the amplifier 415 with its configured FDD split.

In order to achieve real full duplex operations, the CMs (which are coupled to the taps) are firstly grouped based on their logical location relative to the amplifier 415. Referring to the present example as shown in the chart 410, the CMs coupled to the taps 413-1 and 413-2 which are located logically before the amplifier 415 are assigned to the first transmission group 416-1. Similarly, the CMs coupled to the taps 413-3, 413-4, 413-5, and 413-6 which are located logically after the amplifier 415 are assigned to the second transmission group 416-2. That is to say, the CMs coupled to the taps 413-1 and 413-2 which can communicate with the FDX DOCSIS node 412 directly without having to go through the amplifier 415 ("passive") or in other words which located between the FDX DOCSIS node 412 and the amplifier 415, are assigned to the first transmission group 416-1. Similarly, the CMs coupled to the taps 413-3, 413-4 and 413-5 which can only communicate with the FDX DOCSIS node 412 through the amplifier 415 ("active"), are assigned to the second transmission group 416-2.

Subsequently, the grouped first transmission group 416-1 and the second transmission group 416-2 are assigned with respective sets of configurations with complementary transmission directions. As shown in the bottom chart 430 of the present example, the CMs assigned in the second transmission group 416-2 after the amplifier 415 is assigned to operate in the US on a first subband 432 (i.e., 108 - 300 MHz) and a second subband 433 (i.e., 300 - 492 MHz), while to operate in the DS on a third subband 434 (i.e., 492 - 684 MHz), which configuration is corresponding to (in line with) the FDD capability of the amplifier 415 (allowing US in the low frequencies and allowing DS in the high frequencies). Notably, in the present example, the first subband 332 (i.e., 108 - 300 MHz) is further divided into two upstream channels, between 108 - 204 MHz and between 204 - 300 MHz respectively. Further, it is also to be noted that only part of the second subband, i.e., from 300 - 396 MHz, is actually used for upstream signaling, since the amplifier 315 is assumed to have the guard band between 396 and 492 MHz. It is also possible for the second transmission group to use the OFDMA channel between 396 and 492 MHz, albeit at reduced performance due to the filter attenuation in this region.

On the other hand, regarding the CMs in the first transmission group 416-1 before the amplifier 415, the assignment of configurations of respective channel (subband) directions is shown in the middle chart 420. In particular, the CMs in the first transmission group 416-1 are assigned with configurations which are complementary to those assigned to the second transmission group 416-2, or more generally, complementary to the FDD capability of the amplifier 415. As can be seen from the chart 420, the CMs in the first transmission group 416-1 before the amplifier 415 is assigned to operate in the DS on a first subband 422 (i.e., 108 - 300 MHz) and a second subband 423 (i.e., 300 - 492 MHz), while to operate in the US on a third subband 424 (i.e., 492 - 684 MHz). Similar to the US bands in the chart 430, the US band 423 is also sub-divided into two upstream channels. However, it is to be noted that, the CMs in the first transmission group 416-1 before the amplifier 415 do not experience the capacity loss related to the guard band of the diplexer in the amplifier 415 and therefore have access to more downstream capacity than the CMs in the second transmission group 416-2 after the amplifier 415.

It is to be noted that, in the present example, the CMs in the second transmission group 416-2 after the amplifier may be assigned to a RBA configuration of 110 (assuming a "0" indicates DS direction and a "1" indicates a US direction). Accordingly, the CMs in the first transmission group 416-1 before the amplifier may then be assigned with a RBA configuration of 001.

It is yet further to be noted that the CMs before the amplifier 415 can also access the legacy upstream band from 5 to 85 MHz, in addition to those US channels assigned within the FDX band. Similarly, the CMs after the amplifier 415 can also access the legacy US band, in addition to those US channels assigned within the FDX band. The number of users (CMs) sharing the upstream band is significantly decreased compared to an FDD approach (which typically uses only half of its full capacity), which eventually yields a lower probability of contention. For example, this probability would be lowered by 50% if the number of users before and after the amplifier 415 are approximately the same. Thus, single user upstream peak rates of almost 2 Gbps (assuming roughly 750 Mbps per US OFDMA channel) could be achieved in theory by all CMs (both the ones before and after the amplifier).

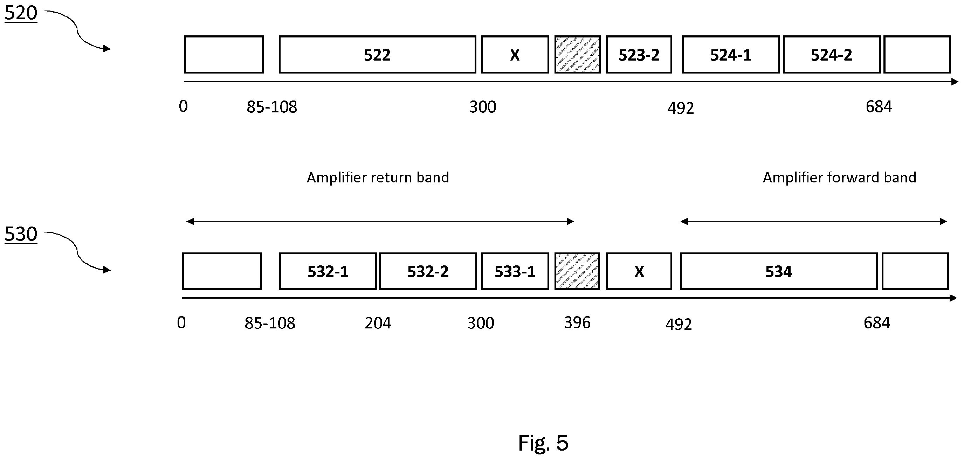

Figure 5 schematically shows another exemplary use case according to an embodiment of the present invention. Like reference numbers in the up and bottom charts 520 and 530 indicate like or similar elements in the charts 420 and 430 of Figure 4, such that repeated description thereof may be omitted for reasons of conciseness.

In particular, the location of the guard band of the FDD-split of the amplifier is shifted (e.g., due to a different requirement of a desired SLA offering). In the present example, the center of the guard band of the amplifier is shifted to 396 MHz, e.g., in order to increase the upstream peak rate of the CMs before the amplifier. Due to the shift of the guard band of the amplifier, the assignments of the second subband (i.e., 300 - 492 MHz) in both the first and second transmission groups have to be adapted accordingly. In the present example, the RBA assigned to the CMs before the amplifier would then be 011 (indicating a DS-US-US configuration) and the RBA assigned to the CMs after the amplifier would be 110 (indicating a US-US-DS configuration).

Referring to the chart 530 for the second transmission group after the amplifier in Figure 5, a smaller portion in the second subband (i.e., 300 - 492 MHz) before the guard band is assigned to US channels, compared to that as shown in the chart 430 in Figure4. Additionally, the remaining portion in the second subband (i.e., 300 - 492 MHz) after the guard band may be not used at all. On the other hand, as shown in the chart 520 for the first transmission group before the amplifier, a portion in the second subband (i.e., 300 - 492 MHz) after the guard band is used in the US direction (instead of the DS configuration as shown in the chart 420 in Figure 4). Additionally, the remaining portion in the second subband (i.e., 300 - 492 MHz) on one side of (in terms of frequency) the guard band may be used by CMs in the first transmission group 516-1 (in addition to the CMs of transmission group 516-2), or not used by CMs in the first transmission group 516-1. Configured as such, the upstream capacity of the CMs before the amplifier could then be increased by the spectrum from the top of the guard band to 492 MHz, while on the other hand reduced by the same amount for the CMs after the amplifier. Therefore, the downstream and upstream capacities in both the first and second transmission groups could be made to be symmetric or more or less equal, as shown in Figure 5. Notably, the guard band which may in theory be usable by the CMs before the amplifier is not used in the present example, again for reasons of symmetry to be achieved. In other examples, the guard band is used by the CMs of the first transmission group. The downside of the Figure 5 example allocation schema is the reduced DS capacity in the second subband, which would no longer be exploited, compared to that as shown in Figure 4. Nevertheless, the legacy DS band from 684 to 1218 MHz is still available yielding a large DS capacity.

In the exemplary use cases as shown in Figure 3 and Figure 4, the need for a sounding procedure required in a conventional DOCSIS cable system (which is typically time consuming) may be avoided in this system, by assigning and using a "complementary" RBA configuration between the first and second transmission groups.

The sounding process is controlled by the CMTS or FDX node and consists of assigning certain CMs, called Test CMs, to transmit predefined sounding signals at a certain time and on certain frequencies. During that transmission, other CMs, the Measurer CMs, measure the SNR values that they are able to achieve under the interference from these Test CMs. By cycling through different Test and Measurer CMs, which introduces overhead and complexity to the operations, the CMTS can measure the interference impact between any two CMs.

Instead, identifying whether a CM is located before or after the amplifier is possible by exploiting DS channel acquisition procedures or US ranging procedures. For example, the US ranging procedure, which needs to be performed before sounding, will not be able to succeed in the channels above the FDD split (e.g., 492-684 MHz as shown in Figure 3) for the CMs after the amplifier because their US signals would be strongly attenuated (filtered out) by the filters inside the amplifier. In this case, if the CMTS (or some other control unit) is made aware of the FDD split configured in the amplifier, it is able to identify the location of all CMs (i.e., whether they're before or after the amplifier). Similarly, a failure of a CM to acquire any DS channel (e.g., below 396 MHz) could be used as well for identifying that that CM must be located after the amplifier.

There may be a need for sounding only on US frequencies from CMs in the 2^{nd} transmission group to CMs in the first transmission groups, since on the first part of the cable plant these communications overlap in frequency and occur simultaneously. However, this sounding can be greatly simplified because all CMs target the same receive power level at the FDX node receiver. Hence, any CM from the second transmission group will cause the same interference to all CMs in the first transmission group, since the passive channel from the upstream output of the amplifier to the FDX node receiver is identical. Therefore, this sounding may only need to use a single Test CM from the second transmission group.

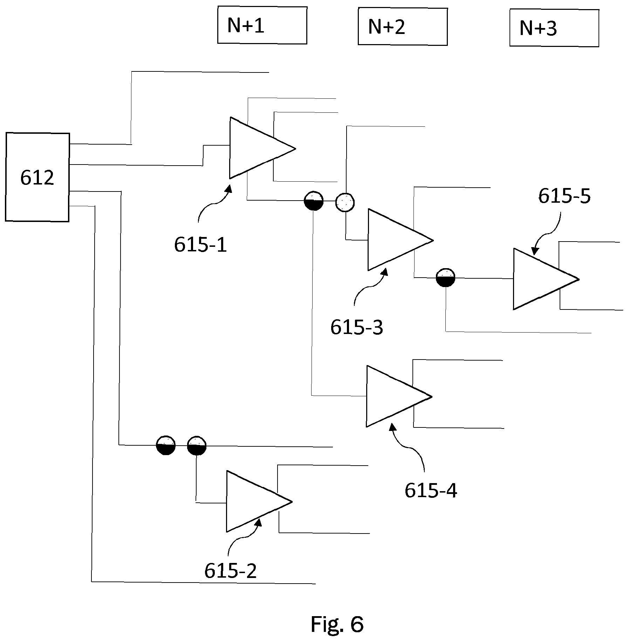

Generally speaking, it may be preferable to have an almost equal number of CMs before and after the amplifier. Typically, an amplifier in HFC networks has multiple output ports, which may be realized by putting a power splitter right after the amplifier. An HFC network branches out from that point to other amplifiers, but also directly to households near that amplifier location. For instance, one RF port of the FDX DOCSIS node might be fully "passive", while another RF port of the FDX DOCSIS node might have one amplifier on its leg (as shown in the chart 210 of Figure 2). In general, there are not any standard numbers available on deciding the number of CMs that would be located before or after the amplifier from an N+1 location in the HFC network. For illustration purpose, a possible example of how amplifiers may be distributed in an exemplary N+3 HFC network deployment is shown in Figure 6.

In particular, in Figure 6, the FDX node 612 comprises four RF ports, each of which is connected to a respective cable distribution network. N+1 generally indicates that there is one amplifier between the node and a cable modem (not shown in this figure). Similarly, N+2 indicates that there are two amplifiers between the node and the cable modem, and so forth. Furthermore, depending on circumstances, the cable network also comprises one or more splitters (shown as full-white circles) and couplers (shown as half-white-and-half-black circles). The choice of whether to use a splitter or a coupler may be dependent on system requirements and/or the full network topology. Typically, a splitter may be used when symmetric power split is preferred. On the other hand, a coupler may be used when asymmetric (e.g., the port indicated by black color requires less power) power split.

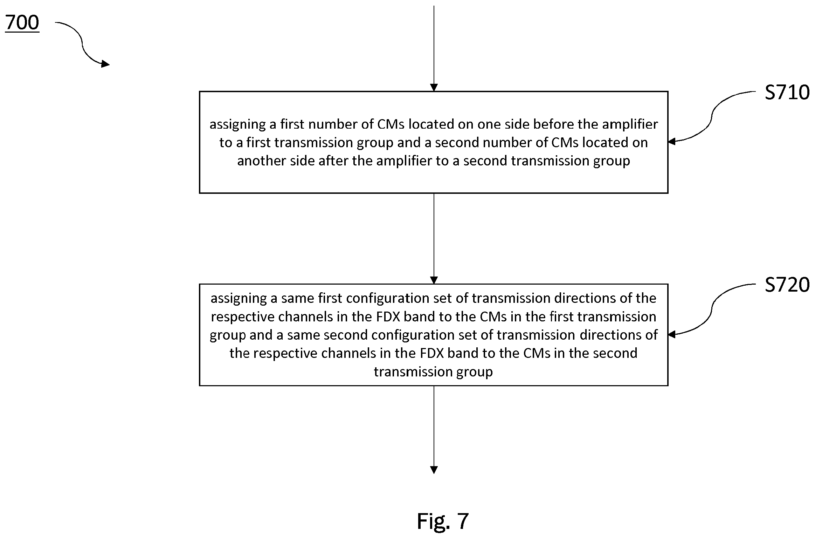

Figure 7 schematically shows an exemplary flow chart of a method 700 according to an embodiment of the present invention.

In particular, the method 700 comprises, at step S710, assigning a first number of CMs located on one side before the amplifier to a first transmission group and a second number of CMs located on another side after the amplifier to a second transmission group. After the grouping, the method 700 further comprises, at step S720, assigning a same first configuration set of transmission directions of the respective channels in the FDX band to the CMs in the first transmission group and a same second configuration set of transmission directions of the respective channels in the FDX band to the CMs in the second transmission group, wherein the transmission direction is either downstream or upstream. More particularly, for a respective subband used by both transmission groups, the respective transmission direction of the respective channel in the first configuration set is assigned to be complementary to the respective transmission direction of the respective channel in the second configuration set.

It should be noted that the apparatus features described above correspond to respective method features that may however not be explicitly described, for reasons of conciseness. The disclosure of the present document is considered to extend also to such method features. In particular, the present disclosure is understood to relate to methods of operating the control unit described above.

## Claims

1. A method (700), implemented by a control unit, for deploying a Full Duplex, FDX, node in a cable system using a FDX band divided into subbands, the cable system comprising a plurality of Cable Modems, CMs, coupled to a cable network, and an amplifier, wherein the method comprises:
assigning (S710) a first number of CMs located before the amplifier to a first transmission group and a second number of CMs located after the amplifier to a second transmission group; and
assigning (S720) a same first configuration set of transmission directions of the subbands in the FDX band to the CMs in the first transmission group and a same second configuration set of transmission directions of the subbands in the FDX band to the CMs in the second transmission group, wherein the transmission direction is either downstream or upstream;
wherein, for at least two subbands, the respective transmission direction of the respective subband in the first configuration set is assigned to be complementary to the respective transmission direction of the respective subband in the second configuration set;
wherein the amplifier comprises a frequency split point and a guard band around the split frequency within the FDX band, such that the amplifier has a Frequency Division Duplex, FDD, capability of amplifying only one transmission direction below the split frequency and
amplifying another transmission direction above the split frequency; and
wherein, for assigning the second configuration set, the second configuration set of transmission directions of the second transmission group is assigned in line with the FDD amplification capability of the amplifier.

2. The method (700) according to claim 1, wherein the first number of CMs before the amplifier and the second number of CMs after the amplifier are determined using a downstream channel acquisition procedure or an upstream channel ranging procedure.

3. The method (700) according to claim 1 or 2, wherein the transmission direction below the split frequency is upstream and the transmission direction above the split frequency is downstream.

4. The method (700) according to any one of claims 1 to 3, wherein at least one subband overlapping with the guard band is used in the same direction by the first and the second transmission groups.

5. The method (700) according to any one of claims 1 to 4, wherein at least one portion of a subband overlapping with the guard band is not assigned for communication to the second transmission group.

6. The method (700) according to claim 5, wherein the at least one portion is assigned for communication to the first transmission group.

7. The method (700) according to any one of claims 1 to 6, wherein the FDX node is a FDX DOCSIS node and the first and second configuration sets are achieved by means of Resources Block Assignments, RBAs.

8. The method (700) according to any one of claims 1 to 7, wherein at least one subband within the FDX band is assigned for communication in both transmission directions simultaneously.

9. The method (700) according to any one of claims 1 to 8, wherein the cable system further comprises at least one second amplifier located after the amplifier and a plurality of further CMs coupled to the cable network, and wherein the method further comprises:
assigning the further CMs which are located after the second amplifier also to the second transmission group.

10. A control unit for deploying a Full Duplex, FDX, node in a cable system using a FDX band divided into subbands, the cable system comprising a plurality of Cable Modems, CMs, coupled to a cable network, and an amplifier, wherein the control unit is configured to:
assign a first set of CMs located before the amplifier to a first transmission group and a second set of CMs located after the amplifier to a second transmission group; and
assign a same first configuration set of transmission directions of the subbands in the FDX band to the CMs in the first transmission group and a same second configuration set of transmission directions of the subbands in the FDX band to the CMs in the second transmission group, wherein the transmission direction is either downstream or upstream;
wherein, for at least two subbands, the control unit is configured to assign the respective transmission direction of the respective subband in the first configuration set to be complementary to the respective transmission direction of the respective subband in the second configuration set,
wherein the amplifier comprises a frequency split point and a guard band around the split frequency within the FDX band, such that the amplifier has a Frequency Division Duplex, FDD, capability of amplifying only one transmission direction below the split frequency and amplifying another transmission direction above the split frequency, and wherein the control unit is configured to assign the second configuration set of transmission directions of the second transmission group in line with the FDD capability of the amplifier.

11. An access node deployed in a cable system, the access node comprising a control unit according to claim 10.

12. A control apparatus comprising:
a processor; and
a memory including computer instructions configured to, with the processor, cause the control apparatus to perform the method (700) according to claim 1,
wherein the control apparatus is deployed in a network cloud for controlling operation of a Full Duplex, FDX, node in a cable system using a FDX band divided into subbands.

## Patentansprüche

1. Verfahren (700), das von einer Steuereinheit implementiert wird, zum Einsetzen eines Vollduplex(FDX)-Knotens in einem Kabelsystem, das ein FDX-Band verwendet, das in Unterbänder geteilt ist, wobei das Kabelsystem eine Vielzahl von Kabelmodems, CMs, die an ein Kabelnetzwerk gekoppelt sind, und einen Verstärker umfasst, wobei das Verfahren Folgendes umfasst:
Zuweisen (S710) einer ersten Anzahl von CMs, die sich vor dem Verstärker befinden, zu einer ersten Übertragungsgruppe und einer zweiten Anzahl von CMs, die sich hinter dem Verstärker befinden, zu einer zweiten Übertragungsgruppe; und
Zuweisen (S720) eines selben ersten Auslegungssatzes von Übertragungsrichtungen der Unterbänder im FDX-Band zu den CMs in der ersten Übertragungsgruppe und eines selben zweiten Auslegungssatzes von Übertragungsrichtungen der Unterbänder im FDX-Band zu den CMs in der zweiten Übertragungsgruppe, wobei die Übertragungsrichtung entweder stromabwärts oder stromaufwärts ist;
wobei für mindestens zwei Unterbänder die jeweilige Übertragungsrichtung des jeweiligen Unterbandes im ersten Auslegungssatz zugewiesen wird, um die jeweilige Übertragungsrichtung des jeweiligen Unterbandes im zweiten Auslegungssatz zu ergänzen;
wobei der Verstärker einen Frequenzteilungspunkt und ein Schutzband um die geteilte Frequenz im FDX-Band umfasst, derart, dass der Verstärker eine Frequenzduplex(FDD)-Fähigkeit zum Verstärken von nur einer Übertragungsrichtung unter der geteilten Frequenz und zum Verstärken einer anderen Übertragungsrichtung über der geteilten Frequenz aufweist; und
wobei zum Zuweisen des zweiten Auslegungssatzes der zweite Auslegungssatz von Übertragungsrichtungen der zweiten Übertragungsgruppe entsprechend der FDD-Verstärkungsfähigkeit des Verstärkers zugewiesen wird.

2. Verfahren (700) nach Anspruch 1, wobei die erste Anzahl von CMs vor dem Verstärker und die zweite Anzahl von CMs hinter dem Verstärker unter Verwendung einer stromabwärtigen Kanalerfassungsprozedur oder einer stromaufwärtigen Kanalortungsprozedur bestimmt werden.

3. Verfahren (700) nach Anspruch 1 oder 2, wobei die Übertragungsrichtung unter der geteilten Frequenz stromaufwärts ist und die Übertragungsrichtung über der geteilten Frequenz stromabwärts ist.

4. Verfahren (700) nach einem der Ansprüche 1 bis 3, wobei mindestens ein Unterband, das das Schutzband überlappt, von der ersten und der zweiten Übertragungsgruppe in derselben Richtung verwendet wird.

5. Verfahren (700) nach einem der Ansprüche 1 bis 4, wobei mindestens ein Abschnitt eines Unterbandes, das das Schutzband überlappt, der zweiten Übertragungsgruppe nicht zur Kommunikation zugewiesen wird.

6. Verfahren (700) nach einem Anspruch 5, wobei der mindestens eine Abschnitt der ersten Übertragungsgruppe zur Kommunikation zugewiesen wird.

7. Verfahren (700) nach einem der Ansprüche 1 bis 6, wobei der FDX-Knoten ein FDX-DOCSIS-Knoten ist und der erste und der zweite Auslegungssatz mittels Ressourcenblockzuweisungen, RBAs, erreicht werden.

8. Verfahren (700) nach einem der Ansprüche 1 bis 7, wobei mindestens ein Unterband im FDX-Band zur Kommunikation in beide Übertragungsrichtungen gleichzeitig zugewiesen wird.

9. Verfahren (700) nach einem der Ansprüche 1 bis 8, wobei das Kabelsystem ferner mindestens einen zweiten Verstärker, der sich hinter dem Verstärker befindet, und eine Vielzahl von weiteren CMs, die an das Kabelnetzwerk gekoppelt sind, umfasst, und wobei das Verfahren ferner Folgendes umfasst:
Zuweisen der weiteren CMs, die sich hinter dem zweiten Verstärker befinden, ebenfalls zur zweiten Übertragungsgruppe.

10. Steuereinheit zum Einsetzen eines Vollduplex(FDX)-Knotens in einem Kabelsystem, das ein FDX-Band verwendet, das in Unterbänder geteilt ist, wobei das Kabelsystem eine Vielzahl von Kabelmodems, CMs, die an ein Kabelnetzwerk gekoppelt sind, und einen Verstärker umfasst, wobei die Steuereinheit zu Folgendem ausgelegt ist:
Zuweisen eines ersten Satzes von CMs, die sich vor dem Verstärker befinden, zu einer ersten Übertragungsgruppe und eines zweiten Satzes von CMs, die sich hinter dem Verstärker befinden, zu einer zweiten Übertragungsgruppe; und
Zuweisen eines selben ersten Auslegungssatzes von Übertragungsrichtungen der Unterbänder im FDX-Band zu den CMs in der ersten Übertragungsgruppe und eines selben zweiten Auslegungssatzes von Übertragungsrichtungen der Unterbänder im FDX-Band zu den CMs in der zweiten Übertragungsgruppe, wobei die Übertragungsrichtung entweder stromabwärts oder stromaufwärts ist;
wobei die Steuereinheit für mindestens zwei Unterbänder dazu ausgelegt ist, die jeweilige Übertragungsrichtung des jeweiligen Unterbandes im ersten Auslegungssatz zuzuweisen, um die jeweilige Übertragungsrichtung des jeweiligen Unterbandes im zweiten Auslegungssatz zu ergänzen,
wobei der Verstärker einen Frequenzteilungspunkt und ein Schutzband um die geteilte Frequenz im FDX-Band umfasst, derart, dass der Verstärker eine Frequenzduplex(FDD)-Fähigkeit zum Verstärken von nur einer Übertragungsrichtung unter der geteilten Frequenz und zum Verstärken einer anderen Übertragungsrichtung über der geteilten Frequenz aufweist, und wobei die Steuereinheit dazu ausgelegt ist, den zweiten Auslegungssatz von Übertragungsrichtungen der zweiten Übertragungsgruppe entsprechend der FDD-Fähigkeit des Verstärkers zuzuweisen.

11. Zugangsknoten, der in einem Kabelsystem eingesetzt wird, wobei der Zugangsknoten eine Steuereinheit nach Anspruch 10 umfasst.

12. Steuervorrichtung, die Folgendes umfasst:
einen Prozessor; und
einen Speicher, der Computeranweisungen beinhaltet, die dazu ausgelegt sind, die Steuervorrichtung mit dem Prozessor zu veranlassen, das Verfahren (700) nach Anspruch 1 durchzuführen,
wobei die Steuervorrichtung in einer Netzwerkcloud zum Steuern des Betriebs eines Vollduplex(FDX)-Knotens in einem Kabelsystem, das ein FDX-Band verwendet, das in Unterbänder geteilt ist, eingesetzt wird.

## Revendications

1. Procédé (700), mis en œuvre par une unité de commande, pour le déploiement d'un nœud en duplex intégral, FDX, dans un système câblé utilisant une bande de FDX divisée en sous-bandes, le système câblé comprenant une pluralité de modems câbles, CM, couplés à un réseau câblé, et un amplificateur, dans lequel le procédé comprend :
l'attribution (S710) d'un premier nombre de CM situés avant l'amplificateur à un premier groupe d'émission et d'un second nombre de CM situés après l'amplificateur à un second groupe d'émission ; et
l'attribution (S720) d'un même premier ensemble de configuration de directions d'émission des sous-bandes dans la bande de FDX aux CM dans le premier groupe d'émission et d'un même second ensemble de configuration de directions d'émission des sous-bandes dans la bande de FDX aux CM dans le second groupe d'émission, dans lequel la direction d'émission est soit descendante, soit montante ;
dans lequel, pour au moins deux sous-bandes, la direction d'émission respective de la sous-bande respective dans le premier ensemble de configuration est attribuée pour qu'elle soit complémentaire à la direction d'émission respective de la sous-bande respective dans le second ensemble de configuration ;
dans lequel l'amplificateur comprend un point de division de fréquence et une bande de garde autour de la fréquence divisée au sein de la bande de FDX, de sorte que l'amplificateur possède une capacité de duplex à répartition en fréquence, FDD, d'amplification d'une seule direction d'émission au-dessous de la fréquence divisée et d'amplification d'une autre direction d'émission au-dessus de la fréquence divisée ; et
dans lequel, pour l'attribution du second ensemble de configuration, le second ensemble de configuration de directions d'émission du second groupe d'émission est attribué conformément à la capacité d'amplification de FDD de l'amplificateur.

2. Procédé (700) selon la revendication 1, dans lequel le premier nombre de CM avant l'amplificateur et le second nombre de CM après l'amplificateur sont déterminés à l'aide d'une procédure d'acquisition de canal descendant ou d'une procédure de télémétrie de canal montant.

3. Procédé (700) selon la revendication 1 ou 2, dans lequel la direction d'émission au-dessous de la fréquence divisée est montante et la direction d'émission au-dessus de la fréquence divisée est descendante.

4. Procédé (700) selon l'une quelconque des revendications 1 à 3, dans lequel au moins une sous-bande superposée avec la bande de garde est utilisée dans la même direction par les premier et second groupes d'émission.

5. Procédé (700) selon l'une quelconque des revendications 1 à 4, dans lequel au moins une partie d'une sous-bande superposée avec la bande de garde n'est pas attribuée pour une communication au second groupe d'émission.

6. Procédé (700) selon la revendication 5, dans lequel l'au moins une partie est attribuée pour une communication au premier groupe d'émission.

7. Procédé (700) selon l'une quelconque des revendications 1 à 6, dans lequel le nœud de FDX est un nœud de FDX à spécification d'interface de service de données par câble, DOCSIS, et les premier et second ensembles de configuration sont obtenus au moyen d'attributions de bloc de ressources, RBA.

8. Procédé (700) selon l'une quelconque des revendications 1 à 7, dans lequel au moins une sous-bande au sein de la bande de FDX est attribuée pour une communication dans les deux directions d'émission simultanément.

9. Procédé (700) selon l'une quelconque des revendications 1 à 8, dans lequel le système câblé comprend en outre au moins un second amplificateur situé après l'amplificateur et une pluralité de CM supplémentaires couplés au réseau câblé, et dans lequel le procédé comprend en outre :
l'attribution des CM supplémentaires qui sont situés après le second amplificateur également au second groupe d'émission.

10. Unité de commande pour le déploiement d'un nœud en duplex intégral, FDX, dans un système câblé utilisant une bande de FDX divisée en sous-bandes, le système câblé comprenant une pluralité de modems câbles, CM, couplés à un réseau câblé, et un amplificateur, dans lequel l'unité de commande est configurée pour :
attribuer un premier ensemble de CM situé avant l'amplificateur à un premier groupe d'émission et un second ensemble de CM situé après l'amplificateur à un second groupe d'émission ; et
attribuer un même premier ensemble de configuration de directions d'émission des sous-bandes dans la bande de FDX aux CM dans le premier groupe d'émission et un même second ensemble de configuration de directions d'émission des sous-bandes dans la bande de FDX aux CM dans le second groupe d'émission, dans lequel la direction d'émission est soit descendante, soit montante ;
dans lequel, pour au moins deux sous-bandes, l'unité de commande est configurée pour attribuer la direction d'émission respective de la sous-bande respective dans le premier ensemble de configuration pour qu'elle soit complémentaire à la direction d'émission respective de la sous-bande respective dans le second ensemble de configuration,
dans lequel l'amplificateur comprend un point de division de fréquence et une bande de garde autour de la fréquence divisée au sein de la bande de FDX, de sorte que l'amplificateur possède une capacité de duplex à répartition en fréquence, FDD, d'amplification d'une seule direction d'émission au-dessous de la fréquence divisée et d'amplification d'une autre direction d'émission au-dessus de la fréquence divisée, et dans lequel l'unité de commande est configurée pour attribuer le second ensemble de configuration de directions d'émission du second groupe d'émission conformément à la capacité de FDD de l'amplificateur.

11. Nœud d'accès déployé dans un système câblé, le nœud d'accès comprenant une unité de commande selon la revendication 10.

12. Appareil de commande comprenant :
un processeur ; et
une mémoire incluant des instructions d'ordinateur configurées pour, avec le processeur, amener l'appareil de commande à réaliser le procédé (700) selon la revendication 1,
dans lequel l'appareil de commande est déployé dans un nuage de réseau pour commander le fonctionnement d'un nœud en duplex intégral, FDX, dans un système câblé utilisant une bande de FDX divisée en sous-bandes.
